# EUROPEAN PATENT SPECIFICATION

(11) **EP 3 030 069 B1**
(45) Date of publication and mention of the grant of the patent: **18.12.2019**
(21) Application number: 14783909.6
(22) Date of filing: 07.08.2014
(51) Int. Cl.: A01B 79/02, A01B 49/06

(54) **METHOD FOR PREPARING AGRICULTURAL GROUNDS FOR CULTIVATIONS AND MACHINE FOR PERFORMING SUCH METHOD**
VERFAHREN ZUR VORBEREITUNG LANDWIRTSCHAFTLICHER BÖDEN FÜR ANPFLANZUNGEN SOWIE MASCHINE ZUR DURCHFÜHRUNG DIESES VERFAHRENS
PROCÉDÉ DE PRÉPARATION DE TERRES AGRICOLES POUR DES CULTURES, ET MACHINE POUR METTRE EN OEUVRE UN TEL PROCÉDÉ

(30) Priority: 07.08.2013 IT RM20130464
(43) Date of publication of application: 15.06.2016
(73) Proprietor: ROTER ITALIA S.r.l., 46035 Ostiglia (MN) (IT)
(72) Inventor: FORIGO, Sandro, 46035 Ostiglia (MN) (IT)
(74) Representative: Garavelli, Paolo
(86) International application number: PCT/IT2014/000211
(87) International publication number: WO 2016/020946

(56) References cited:
- EP-A1- 1 654 919
- EP-A1- 1 811 218
- WO-A1-95/01091
- US-A- 3 532 169
- US-A- 4 683 826
- US-A- 4 724 781
- US-A- 5 240 080
- US-A- 5 271 342

## Description

The present invention relates to a method and a machine for performing said method, adapted to perform a complete treatment for preparing the ground for cultivations. Said treatment consists in the following steps:
- Spraying, by incorporation into the ground, liquid and/or solid substances such as phytodrugs, herbicides, fertilizers and amending substances;
- forming the ground with a bed forming:
- laying lines of hoses for irrigation and fertilization;
- laying and ridging a plastic film for each bed.

Preparing agricultural grounds for cultivations provides for performing various operations concerning both preparing the ground per se with a spraying of substances for sterilization and fertilization, and forming beds having suitable sizes for particular cultures. Moreover, modern agriculture also provides for the laying into the ground of hoses through which fertilizers and water for irrigation are inserted.

For each one of said operations, suitable machines have been developed; however, when performing these operations in subsequent times, inconveniences are generates which reduce the efficiency of the whole operation.

As regards insertion in beds of hoses for irrigation and fertilization, by making the beds and inserting said hoses in a following step, it frequently happens that the hoses themselves are not laid in their correct position inside said beds. This inconvenience occurs because the operation efficiency is affected by the driving accuracy of the dragging tractor. It is clear that the tractor trajectory will be controlled with difficulty, with the necessary accuracy, along its whole path, and therefore the hoses in many points will depart from the ideal position for their use.

The use of hoses allows reducing the use of fertilizers and water for irrigation, due to the fact that the substances are laid immediately nearby the plant roots. Moreover, the plants themselves, or their seeds, are laid with mechanical means, to guarantee the exact positioning of the plants.

The position inaccuracy of the hoses implies two rather relevant inconveniences. Firstly, water and fertilizers are laid in the ground at distances which on average are longer than what would be advisable, and this compels to use greater amounts both of water, and of fertilizers. Secondly, since laying of small plants, or of seeds, occurs with mechanical means, there is a high risk that the tool immersed into the ground for planting, or seeding, impacts against said hoses, damaging them and compelling to replace them.

As regards spraying by incorporation into the ground of liquid and/or solid substances such as phytodrugs, herbicides, fertilizers and amending substances, it is necessary to observe that agricultural grounds are often infested by fungus and pathogens, which can be found at a depth which the tools normally used for working do not reach. These tools are normally millers, which till the ground down to a depth of about 15 centimeters. Often these millers are coupled with spraying device, which spray the ground itself with fumigating liquid substances, namely substances which evaporate and exert a disinfecting action in their gaseous state.

In the most sophisticated cases, such as those disclosed in European Patents EP1654919 and EP1695602, of the same Applicant, said devices coupled with earthing machines which manage, in a single pass, to perform the treatment of fuming and preparing the ground for seeding.

With these machines, fumigating substances are inserted into the ground at a maximum depth of about 15 centimeters, namely the maximum depth reached by tools. It follows that those cultures which develop themselves deep in the ground, such as, for example, potatoes, leeks and carrots, would be developed in a non-treated part of the ground, therefore still infested by pathogens and fungus, with obvious negative consequences.

Making machines adapted to treat the ground also at greater depths, by simply making them with suitable sizes, cannot be proposed in the majority of cases, since said machines would be excessively encumbering and heavy, in addition to being more costly. Moreover, they would require an actuating power which is not normally available in the majority of tractors owned by agricultural farms. Then, in case of cultures made in a greenhouse, it would even not be possible to use tractors having an adequate power, since their sizes would not allow maneuvring in reduced spaces.

Therefore, in the current state of the art, fuming is performed by injecting fumigating substances at the required depth, for example through sprayers applied to the lower ends of a plurality of plowshares, which are advanced in the ground by a tractor, and afterwards performing a mechanical preparing treatment of the ground for seeding with milling or earthing machines. Said mechanical operation imples crushing and overturning the ground and afterward compacting it, performed with a suitable roller, adapted to create a scarcely permeable layer which allows the injected substances to remain in the ground for a long time, where they can exert their fumigating action. The most relevant prior art is disclosed in documents EP A1-1 811 218, EP-A1-1 654 919, US-A-3 532 169, US-A-4 724 781, WO-A1-95/01091, US-A-4 683 826, US-A-5 271 342 and US-A-5 240 080.

The described art has some inconveniences.

A first inconvenience of this spraying art consists in that the plowshares overturn the ground and strongly modify its surface, leaving a very wide furrow, from which the major part of developed gases are dispersed in the atmosphere without having performed their function in the ground. In fact, the following working through milling and compacting necessarily occurs after a time interval, during which the sprayed substances start evaporating and being dispersed in the atmosphere. This has several negative consequences, since it compels to use greater amounts of fumigating substances, with an increase of costs and a greater environmental impact, since there are more chemical products which are dispersed in the environment. Moreover, the operator passing on the ground to perform the second working will be exposed to the action of substances obnoxious for his health.

The fact that the complete operation requires more that twice the time to be performed must also be taken into account.

Finally, the ground moved by the plowshares is composed of rough sods which can be formed as beds with difficulty, to be covered by laying a film of plastic material, purpose of said coverage being to keep in the ground, as long as possible, the fumigating substances which perform their action in their gaseous state. When the covering operation of the ground with said plastic film occurs in a pass following the one in which the fumigating substance has been inserted into the ground, covering the ground occurs when part of developed vapors has already been dispersed into the atmosphere. This again implies the use of greater amounts of fumigating substances, with following increase of pollution problems, in addition to an increase of costs.

The present invention solves at least partly the above problems by providing a method and a machine, respectively as claimed in claims 1 and 10.

The method provides for laying the hoses for irrigation and fertilization simultaneously when forming the bed.

In this way, the hoses are laid in the ground in their exact position with respect to the newly formed bed, solving the inaccuracy problem, since said position is determined by the laying devices and not by the path traveled by the tractor.

The method further comprises the following steps:
- spraying, by incorporation into the ground, liquid and/or solid substances such as phytodrugs, herbicides, fertilizers and amending substances;
- laying and ridging a plastic film for each bed; said steps being actuated in a single pass of the machine.

According to the invention, spraying by incorporation into the ground of liquid substances occurs by opening a lenticular recess in the ground and spraying said fumigating liquid substances in said recess, forming said lenticular recess occurring without overturning the above ground, so that said recess can be closed again after spraying said fumigating liquid substances, impairing the dispersion into the atmosphere of the fumes produced by said fumigating liquid substances.

The machine according to the invention, for preparing the ground for cultivation by forming beds is characterized in that it comprises:
- a first device adapted to spray the ground;
- a system of baffles adapted to form said beds;
- a second device adapted to perform the laying of hoses for irrigation and fertilization of the ground, inside said newly formed beds.

Said second device for laying said hoses is assembled on the machine so that said hoses are inserted inside the beds upon forming the beds themselves.

According to the invention, said first device adapted to spray the ground comprises:
- first means adapted to open a lenticular recess in the ground;
- second means, placed next to said first means, adapted to spray said fumigating liquid substances inside said lenticular recess;
opening of said lenticular recess occurring without overturning the above ground, so that said recess can be closed again after spraying said fumigating liquid substances, impairing the dispersion into the atmosphere of the fumes produced by said fumigating liquid substances.

According to another preferred embodiment, said first device adapted to spray the ground can advantageously be coupled with a milling machine to till the ground simultaneously with the fuming operation. This coupling is disclosed in EP1654919, in case of liquid substances and, respectively, in IT1391763, in case of solid substances, both these patents belonging to the same Applicant of the present invention.

The machine according to the invention is then further equipped with a device for laying a layer of plastic film. In practice, immediately after forming the bed, this plastic film is laid and ridged thereon, this sealing the bed and keeping in the ground, for a much longer time, the vapors produced by the embedded fumigating substances.

According to a further preferred embodiment, the machine according to the invention is adapted to be assembled side by side to other machines performing the same functions. In this way, as many beds can simultaneously be made as the number of flanked machines, consequently increasing the productivity.

Performing the method and using machines complying with the invention therefore allow making the works more efficient and inexpensive, reducing the pollution problems and, above all, safeguarding the health of operators who are not compelled any more to pass again on the ground sprayed with fumigating substances.

The invention will now be described according to preferred embodiments thereof, provided as a non-limiting example, with reference to the enclosed figures, in which:
- figures 1 and 2 show in two perspective views a first preferred embodiment of the machine according to the invention;
- figure 3 is a side view of the first embodiment of the machine, in an operating configuration;
- figure 4 shows, in three orthogonal views and two perspective views, an anchor equipped with a spraying device;
- figure 5 shows, in three orthogonal views and one perspective view, a second preferred embodiment of the machine according to the invention;
- figures 6 and 7 show, in three orthogonal views and one perspective view, a preferred variation of the invention.

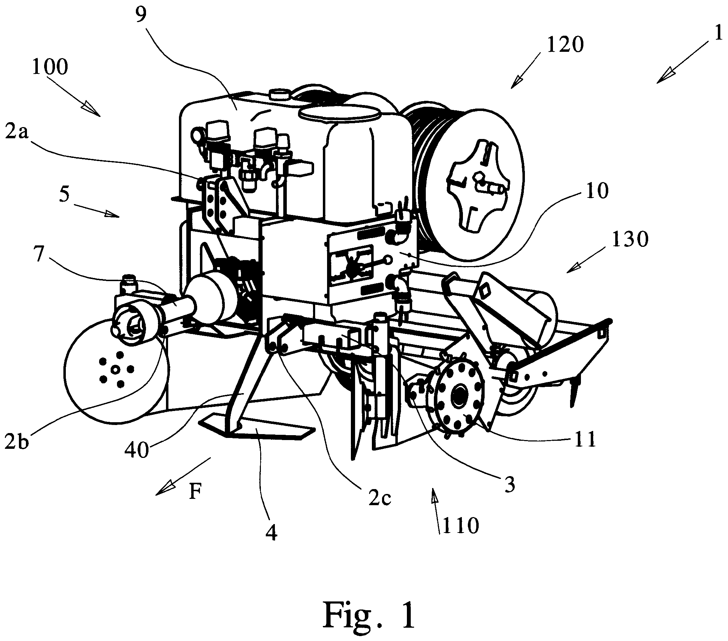

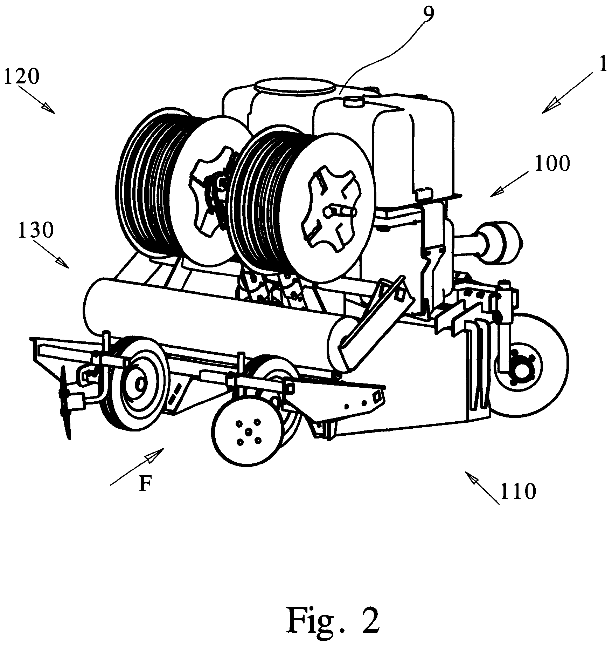

With reference to figures 1, 2 and 3, (1) designates a first preferred embodiment of the machine according to the invention. The machine (1) is shown in figure 1 according to a perspective view, from the part which is connected to the dragging tractor by means of a classical three-point connection designated with (2a, 2b, 2c), and in figure 2, from the opposite part. Arrow **F** designates the advancement direction when performing the works.

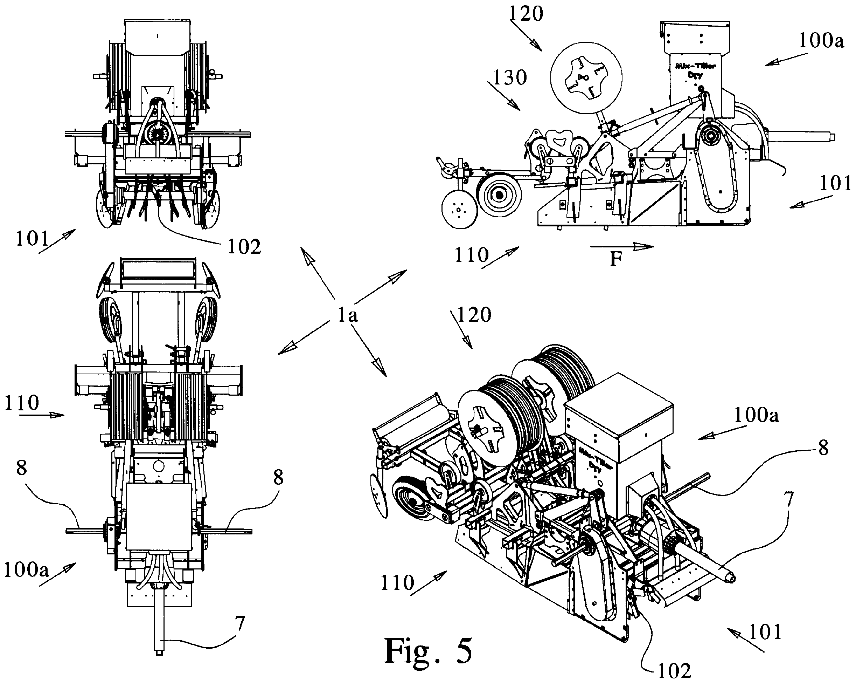

Figure 5 shows a second preferred embodiment (1a) of the machine according to the invention.

Both said machines (1, 1a) comprise:
- a first device (100, 100a) adapted to spray the ground;
- a system of baffles (110) adapted to form a bed;
- a second device (120) adapted to perform the laying of hoses for irrigation and fertilization of the ground, inside said newly formed bed.

In order to keep vapors as long as possible in the ground, a third device (130) is preferably provided, adapted to lay a film of plastic material on the bed.

The two machines (1) and (1a) are distinguished by their different device (100, 100a) for spraying the ground.

Said device (100), related to machine (1), is adapted to spray the ground with liquid substances and is particularly useful for operating at depths greater than 15 centimeters.

Said device (100a), related to machine (1a), is adapted to spray the ground with liquid and solid substances, at the maximum depth of about 15 centimeters. The device (100a) can advantageously be coupled with a milling machine (101) for tilling the ground simultaneously with the fuming operation. The miller (102) of said milling machine (101) performs the incorporation of the fumigating product by energically re-mixing it with the ground. This coupling is disclosed in EP1654919, in case of liquid substances and, respectively, in IT1391763, in case of solid substances, both these patents being of the same Applicant of the present invention.

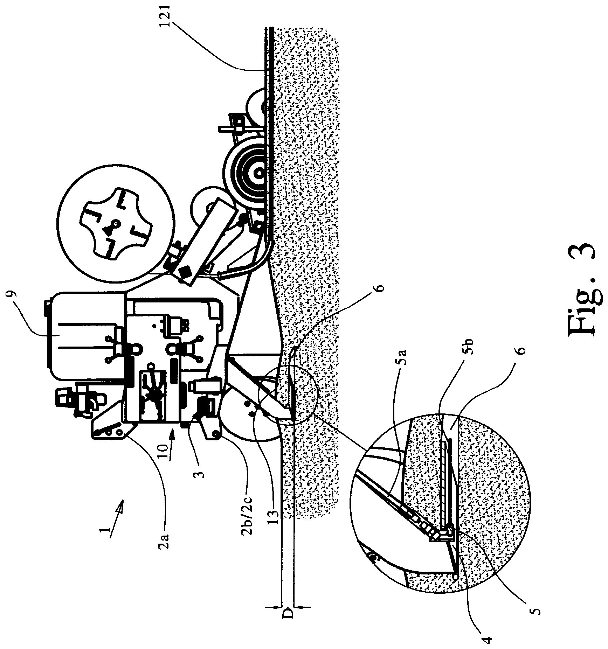

According to this first embodiment of the machine (1) of the invention, on the chassis (3) of the machine (1) an anchor (4) is assembled, through a blade (40) which operates as support for said anchor (4). A sprayer (5) is placed below said anchor (4) (figure 3), supplied by a piping (5a), which sprays the ground. In practice, the anchor (4), advancing in the ground, opens a lenticular recess (6), inside which spraying of the fumigating liquid occurs. To obtain the best spraying result, the jet (5b) of the sprayer (5) has a thin thickness and widens as a fan in order to reach the side edges of the recess (6).

The following components complete the machine (1): a power takeoff (7), a tank (9) for containing the fumigating liquid substances, a series of apparatuses, contained in a cabinet (10), to adjust the flow of liquid to be sprayed, said adjustment being performed depending on the advancement speed of the machine, detected by a phonic wheel (11).

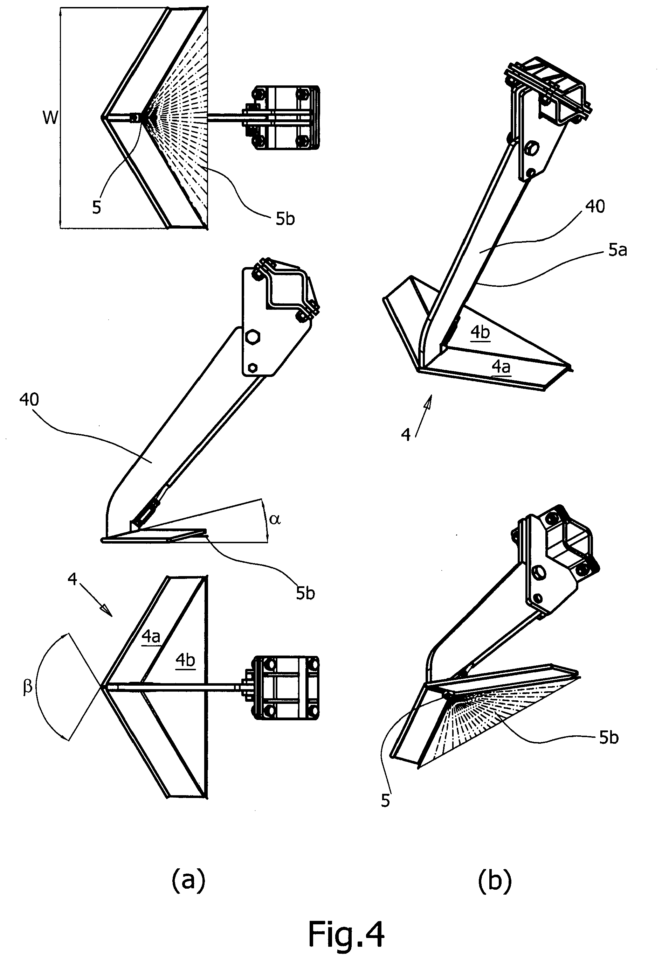

Figures 4 (a, b) show, in three orthogonal views and two perspective views, an anchor (4) assembled on its support (40) which connects it to the chassis (3) of the machine (1) according to the invention.

The anchor (4) is assembled on the support (40) in order to have a slanted part (4a) which has an incidence angle **α** included between 12° and 20°, and has a camber angle **β** included between 110° and 140°.

According to a preferred embodiment, **α** = 15° **β** = 135°. For incidence angles **α** greater than the above ones, the ground tends to overturn, while for incidence angles **α** smaller than the above ones, the thickness of the recess (6) is too thin, so that it is not possible to have, in front of the sprayer (5), a free space enough wide to allow an efficient spray.

According to the invention, the upper part (4b) of the anchor (4) has null slanting, having the purpose of supporting the ceiling of the recess (6), in order to guarantee a free space to the sprayer (5) below, thereby guaranteeing that the jet (5b) reaches the edges of the recess (6).

For camber angles **β** greater than the above ones, the anchor (4) is not self-cleaned, while for camber angles **β** smaller than the above ones, the length of the anchor becomes excessive.

Obviously, the working depth **D** is also important, since, if this depth **D** is too small, the desired result cannot be obtained.

The search has demonstrated that, for a transverse size **W** of the anchor (4) equal to 460÷600 mm, the minimum working depth **D** must be greater than 50 mm.

As regards the supporting blade (40), it must be as thin as possible, compatibly with its structural and protecting function for the piping (5a), in order to perform the thinnest possible cut in the ground.

Anchors (4) and supports (40) having the above described geometric features only minimally modify the ground inside which they advance.

Summarizing, the anchor (4), advancing in the ground, creates a slight lifting of the ground itself without generating lateral displacements, or even overturns. Simultaneously, the supporting blade (40) only creates a thin slit which is immediately closed again, said closure being enabled by making the bed.

In practice, the ground profile, as appears from figure 3, forms a wave advancing together with the machine, with its topmost point (13) on the vertical line of the anchor (4). Next to the anchor itself, instead, said recess (6) is formed with a lenticular shape, said recess being immediately closed again after the passage of the anchor (4) due to the weight of the above ground and of the system of baffles (110) forming the bed.

Figure 5 shows said second preferred embodiment (1a) of the machine according to the invention.

The machine (1a) is fastened onto the three-point connection of a tractor and is actuated by the engine of this tractor through the transmission shaft (7). Moreover, the machine (1a), dragged by said tractor, advanced along the direction designated by arrow **F.**

Both machines (1, 1a) operate according to the following procedure:
- the first device (100, 100a) sprays the ground with the fumigating substances;
- the system of baffles (110) forms the bed;
- the second device (120) inserts a pair of hoses (121) for irrigation and fertilization inside said bed;
- the third device (130) covers the bed, as soon as it is formed, with a plastic film (not shown).

The bed is then sealed and the developing vapors, due to the evaporation of the fumigating substances, are kept inside the bed itself.

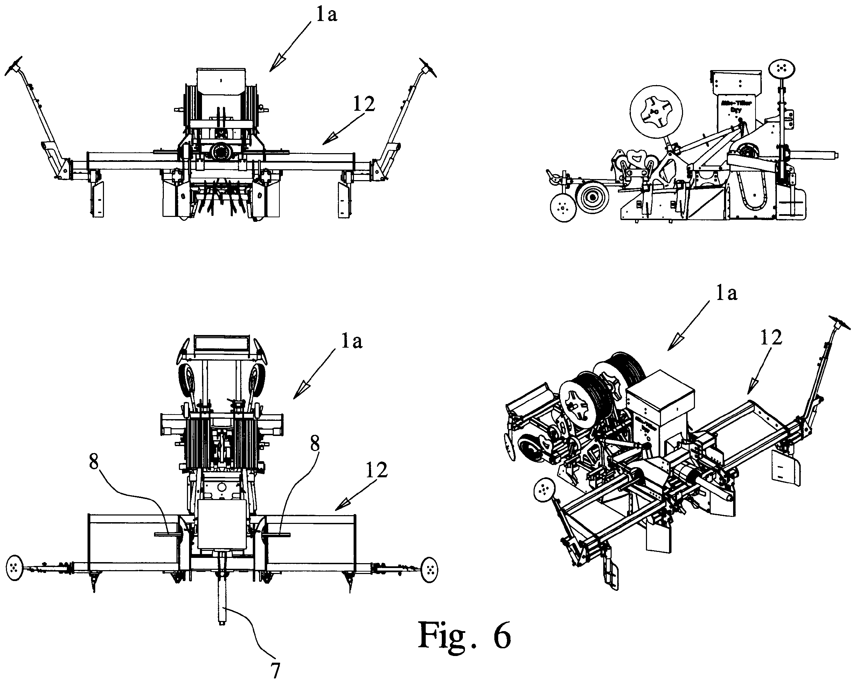

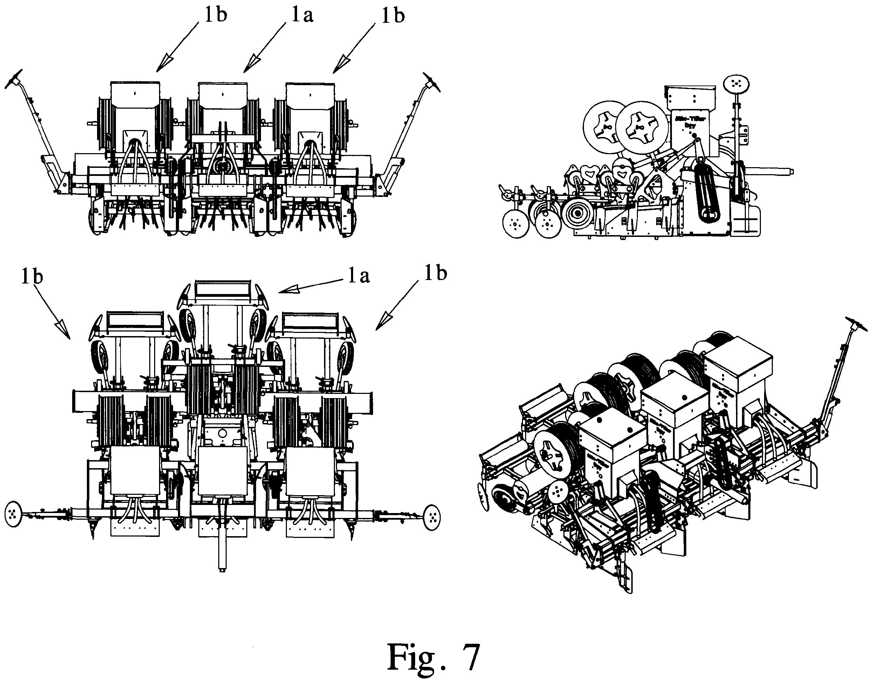

Figures 6 and 7 show a preferred variation of the invention, in which the machine (1a), assembled on a chassis (12), is flanked by two machines (1b) which perform the same functions of the first machine (1a). For such purpose, the machine (1a) is equipped with side transmission shafts (8) adapted to transmit the movement, through suitable gears, to other flanking machines (1b). In this way, it is possible to simultaneously make as many beds as the number of flanked machines on the chassis (12), consequently increasing the machine productivity.

Obviously, the described flanking can be also made with machines (1) of the first type, by providing, in this case, for transmission members (8), if needed for the operation of said flanked machines (1).

From the previous description, the stated advantages are confirmed, since it is clear that the laying accuracy of the hoses does not depend any more and in any way on the tractor driving accuracy. Moreover, sealing of the beds through a plastic film allows preventing practically all vapors, due to the embedded fumigating substances, from going out of the ground.

## Claims

1. Agricultural machine (1, 1a, 1b) for preparing the ground for cultivations by forming beds, of the type that comprises:
• a first device (100, 100a) adapted to spray the ground;
• a system of baffles (110) adapted to form said beds;
• a second device (120) adapted to perform the laying of hoses (121) for irrigation and fertilization of the ground, inside said newly formed beds;
said second device (120) for laying said hoses being assembled on said machine (1, 1a, 1b), means being provided to insert said hoses (121) inside the beds upon forming said beds, **characterized in that** said first device (100) adapted to spray the ground comprises:
• first means (4) adapted to open a lenticular recess (6) in said ground;
• second means (5), placed next to said first means (4), adapted to spray said liquid fumigating substances inside said lenticular recess (6);
said first means (4) being adapted to open said lenticular recess (6) without generating an overturn of the above ground, so that said recess (6) is closed again after spraying said fumigating liquid substances, impairing the dispersion into the atmosphere of the fumes produced by said fumigating liquid substances, said first means, adapted to open said lenticular recess (6) in said ground, comprising at least one anchor (4), stiffly connected to the chassis (3) of the machine (1), said anchor (4) being assembled on a support (40), in order to have a slanted part (4a) which has an incidence angle **α** included between 12° and 20°, and having a camber angle **β** included between 110° and 140°, said machine (1) further comprising an upper part (4b) of the anchor (4) having a substantially null slanting, in order to support the ceiling of said lenticular recess (6), and to guarantee a free space to said second means (5) below, thereby guaranteeing that said fumigating substances are sprayed also on the edges of said lenticular recess (6).

2. Machine (1) for preparing the ground for cultivations according to claim 1, **characterized in that** said incidence angle **α** is 15°.

3. Machine (1) for preparing the ground for cultivations according to claim 1, **characterized in** - that said camber angle **β** is 135°.

4. Machine (1) for preparing the ground for cultivations according to any one of claims 1 to 3, **characterized in that** said second means adapted to spray said ground with a fumigating liquid substance, comprise sprayers (5), placed below said anchors (4).

5. Machine (1) for preparing the ground for cultivations according to claim 4, **characterized in that** said sprayers (5) are adapted to obtain jets (5b) with a thin thickness and which widen as a fan, in order to reach the side edges of said recess (6).

6. Machine (1a, 1b) for preparing the ground for cultivations according to claim 1, **characterized in that** said first device (100a) adapted to spray the ground is coupled with a milling machine (101) to till said ground simultaneously with the fuming operation, the miller (102) of said milling machine (101) performing the incorporation of the fumigating product into the ground.

7. Machine (1, 1a) for preparing the ground for cultivations according to any one of claims 1 to 6, **characterized in that** it has a third device (130) adapted to lay a film of plastic material onto said beds, said device being adapted to cover the bed simultaneously with forming said bed.

8. Machine (1, 1a, 1b) for preparing the ground for cultivations according to any one of claims 1 to 7, **characterized in that** it provides for a side-by-side assembly of a plurality of said machines (1, 1a, 1b) on a chassis (12), made integral with the dragging tractor.

9. Machine (1, 1a, 1b) for preparing the ground for cultivations according to claim 8, **characterized in that** it has transmission members (8) of the motion from said machine (1, 1a) to the plurality of said side-by-side machines (1b).

10. Method for preparing the ground for cultivations using a machine (1, 1a, 1b) according to any one of the previous claims, by forming beds, and introducing, in said beds, hoses (121) for irrigation and fertilization, said method comprising the steps of:
- laying said hoses (121) for irrigation and fertilization simultaneously with forming said beds;
- spraying, by incorporation in the ground, liquid and/or solid substances such as phytodrugs, herbicides, fertilizers and amending substances, said spraying being performed simultaneously with forming said beds,
**characterized in that** said step of spraying liquid substances by incorporation in the ground occurs by opening a lenticular recess (6) in said ground and spraying said fumigating liquid substances in said lenticular recess (6), forming of said lenticular recess (6) occurring without overturning the above ground, so that said recess (6) is closed again after spraying said fumigating liquid substances, impairing the dispersion into the atmosphere of fumes produced by said fumigating liquid substances.

## Patentansprüche

1. Landwirtschaftsmaschine (1, 1a, 1b) für die Vorbereitung des Bodens für den Anbau durch die Bildung von Hohlräumen, die Folgendes enthält:
• eine erste Vorrichtung (100, 100a), die dazu dient, den Boden zu bespritzen;
• ein Ablenksystem (110), das dazu dient, die genannten Hohlräume zu bilden;
• eine zweite Vorrichtung (120), die dazu dient, die Schlauchverlegung (121) für die Bespritzung und Düngung des Bodens in den soeben gebildeten genannten Hohlräumen auszuführen;
Die genannte zweite Vorrichtung (120) für die Schlauchverlegung ist auf der genannten Maschine (1, 1a, 1b) montiert, es sind Mittel vorgesehen, um die genannten Schläuche (121) bei der Bildung der genannten Hohlräume in die Hohlräume einzuführen, sie ist **dadurch gekennzeichnet, dass** die genannte erste Vorrichtung (100), die dazu dient, den Boden zu bespritzen, Folgendes enthält:
• erste Mittel (4), die dazu dienen, einen linsenförmigen Hohlraum (6) im genannten Boden zu öffnen;
• zweite Mittel (5), die an den genannten ersten Mitteln (4) angebracht sind, die dazu dienen, die genannten flüssigen Begasungsmittel in den genannten linsenförmigen Hohlraum 86) zu spritzen;
Die genannten ersten Mittel (4) dienen dazu, den genannten linsenförmigen Hohlraum (6) zu öffnen, ohne ein Umkippen des darüber befindlichen Bodens auszulösen, sodass sich der genannte Hohlraum (6) nach dem Bespritzen der genannten flüssigen Begasungsmittel wieder schließt und die Verbreitung des Rauches in der Atmosphäre verhindert, der durch die genannten flüssigen Begasungsmittel erzeugt wird, die genannten ersten Mittel, die dazu dienen, den genannten linsenförmigen Hohlraum (6) im genannten Boden zu öffnen, enthalten einen Anker (4), der fest mit dem Rahmen (3) der Maschine (1) verbunden ist, der genannte Anker (4) ist auf einer Halterung (40) montiert, um einen schrägen Teil (4a) zu erhalten, der einen Neigungswinkel **α** zwischen 12 ° und 20 ° und einen Pfeilwinkel **β** zwischen 110 ° und 140° hat, die genannte Maschine (1) enthält außerdem einen oberen Teil (4b) des Ankers (4), der eine grundlegende Neigung von null hat, mit dem Zweck, die Biegung des genannten linsenförmigen Hohlraums (6) zu stützen und den genannten darunter befindlichen Mitteln (5) einen freien Platz zu garantieren, um zu garantieren, dass die genannten flüssigen Begasungsmittel auch an die Kanten des genannten linsenförmigen Hohlraums (6) gespritzt werden.

2. Maschine (1) für die Vorbereitung des Bodens für den Anbau gemäß Patentanspruch 1, die **dadurch gekennzeichnet ist, dass** der genannte Neigungswinkel **α** 15° beträgt.

3. Maschine (1) für die Vorbereitung des Bodens für den Anbau gemäß Patentanspruch 1, die **dadurch gekennzeichnet ist, dass** der genannte Pfeilwinkel **β** 135° beträgt.

4. Maschine (1) für die Vorbereitung des Bodens für den Anbau gemäß einem beliebigen der Patentansprüche von 1 bis 3, die **dadurch gekennzeichnet ist, dass** die genannten zweiten Mittel, die dazu dienen, den genannten Boden mit einem flüssigen Begasungsmittel zu bespritzen, Spritzdüsen (5) enthalten, die unter den genannten Ankern (4) angebracht sind.

5. Maschine (1) für die Vorbereitung des Bodens für den Anbau gemäß Patentanspruch 4, die **dadurch gekennzeichnet ist, dass** die genannten Spritzdüsen (5) dazu dienen, Strahlen (5b) mit dünner Stärke zu erhalten, die sich fächerartig erweitern, um die Seitenkanten des genannten Hohlraums (6) zu erreichen.

6. Maschine (1a, 1b) für die Vorbereitung des Bodens für den Anbau gemäß Patentanspruch 1, die **dadurch gekennzeichnet ist, dass** die genannte erste Vorrichtung (100a), die dazu dient, den Boden zu bespritzen, mit einer Fräsmaschine (101) kombiniert ist, um den genannten Boden gleichzeitig mit der Ausräucherung aufzulockern, die Fräse (102) der genannten Fräsmaschine (101) führt die Beimischung des Begasungsproduktes in den Boden aus.

7. Maschine (1, 1a) für die Vorbereitung des Bodens für den Anbau gemäß einem beliebigen der Patentansprüche von 1 bis 6, die **dadurch gekennzeichnet ist, dass** sie eine dritte Vorrichtung (130) hat, die dazu dient, einen Kunststofffilm auf dem genannten Hohlraum auszubreiten, die genannte Vorrichtung dient dazu, den Hohlraum gleichzeitig mit der Bildung des genannten Hohlraums zu decken.

8. Maschine (1, 1a) für die Vorbereitung des Bodens für den Anbau gemäß einem beliebigen der Patentansprüche von 1 bis 7, die **dadurch gekennzeichnet** ist, eine Montage vorzusehen, die durch eine Vielzahl der genannten Maschinen (1, 1a, 1b) auf einem Rahmen (12) begleitet wird, der integral mit der Zugmaschine ist.

9. Maschine (1, 1a, 1b) für die Vorbereitung des Bodens für den Anbau gemäß Patentanspruch 8, die **dadurch gekennzeichnet** ist, Antriebselemente (8) der Bewegung der genannten Maschine (1, 1a) an der Vielzahl der genannten begleitenden Maschinen (1b) vorzusehen.

10. Methode für die Vorbereitung des Bodens für den Anbau mit Verwendung einer Maschine (1, 1a, 1b) gemäß einem beliebigen der vorhergehenden Patentansprüche durch die Bildung eines Hohlraums und die Einführung von Schläuchen (121) zur Bespritzung und Düngung des genannten Hohlraums, die genannte Methode umfasst folgende Phasen:
- Die genannten Schläuche (121) zur Bespritzung und Düngung gleichzeitig mit der Bildung der genannten Hohlräume verlegen;
- Flüssigkeiten und/oder feste Stoffe wie Pflanzenschutzmittel, Unkrautbekämpfungsmittel, Dünger und Bodenverbesserungsmittel für die Beimischung in den Boden spritzen, die genannte Bespritzung wird gleichzeitig zur Bildung des genannten Hohlraums ausgeführt;
und ist **dadurch gekennzeichnet, dass** die genannte Bespritzungsphase der Flüssigkeiten für die Beimischung in den Boden durch die Öffnung eines linsenförmigen Hohlraums (6) in den genannten Boden und die Bespritzung der genannten flüssigen Begasungsmittel des genannten linsenförmigen Hohlraums (6) erfolgt, die Bildung des genannten linsenförmigen (6) Hohlraums erfolgt ohne Umkippen des darüber befindlichen Bodens, sodass sich der genannte Hohlraum (6) wieder schließt, nachdem die genannten flüssigen Begasungsmittel gespritzt wurden und die Verbreitung des von den genannten flüssigen Begasungsmittel erzeugten Rauches in der Atmosphäre verhindert.

## Revendications

1. Machine agricole (1, 1a, 1b) pour préparer le terrain à la culture en formant des portions de sol, du type comprenant :
• un premier dispositif (100, 100a) apte à irriguer le terrain ;
• un système de déflecteurs (110) apte à former des portions de sol ;
• un second dispositif (120) apte à effectuer la pose de tuyaux (121) pour l'irrigation et la fertilisation du terrain à l'intérieur des portions de sol qui viennent d'être formées ;
le second dispositif (120) pour la pose des tuyaux est monté sur la machine (1, 1a, 1b), on a prévu des moyens pour insérer les tuyaux (121) dans les portions de sol lors de la formation de ces dernières, **caractérisée en ce que** le premier dispositif (100) apte à irriguer le terrain comprend :
• des premiers moyens (4) apte à ouvrir une cavité lenticulaire (6) dans le terrain ;
• des seconds moyens (5), placés au niveau des premiers moyens (4), aptes à pulvériser les produits fumigants liquides à l'intérieur de la cavité lenticulaire (6) ;
les premiers moyens (4) sont aptes à ouvrir la cavité lenticulaire (6) sans provoquer le retournement du terrain situé au-dessus, de manière que la cavité (6) se referme après la pulvérisation des produits fumigants liquides, ce qui évite la dispersion dans l'atmosphère des fumées produites par les produits fumigants liquides ; les premiers moyens, aptes à ouvrir la cavité lenticulaire (6) dans le terrain, comprennent au moins une ancre (4), rigidement reliée au châssis (3) de la machine (1) ; l'ancre (4) est montée sur un support (40), de façon à avoir une partie inclinée (4a) qui présente un angle d'incidence **α** compris entre 12° et 20°, et un angle de flèche **β** compris entre 110° et 140°; la machine (1) comprend aussi une partie supérieure (4b) de l'ancre (4) ayant une inclinaison substantiellement nulle, afin de soutenir la voûte de la cavité lenticulaire (6) et former un espace libre pour les seconds moyens (5) situés au-dessous, cela permet de garantir que les produits fumigants soient aussi pulvérisés sur les bords de la cavité lenticulaire (6).

2. Machine (1) pour la préparation du terrain à la culture, selon la revendication 1, **caractérisée en ce que** l'angle d'incidence **α** est de 15°.

3. Machine (1) pour la préparation du terrain à la culture, selon la revendication 1, **caractérisée en ce que** l'angle de flèche **β** est de 135°.

4. Machine (1) pour la préparation du terrain à la culture, selon l'une des revendications de 1 à 3, **caractérisée en ce que** les seconds moyens aptes à irriguer le terrain avec un produit fumigant liquide comprennent des gicleurs (5) placés sous les ancres (4).

5. Machine (1) pour la préparation du terrain à la culture, selon la revendication 4, **caractérisée en ce que** les gicleurs (5) sono aptes à former des jets (5b) très fins qui s'ouvrent en éventail pour atteindre les bords latéraux de la cavité (6).

6. Machine (1a, 1b) pour la préparation du terrain à la culture, selon la revendication 1, **caractérisée en ce que** le premier dispositif (100a) apte à irriguer le terrain est associé à une fraiseuse (101) pour défraichir le terrain en même temps que l'opération de fumigation ; la fraise (102) de la fraiseuse (101) s'occupe de l'incorporation du produit fumigant dans le terrain.

7. Machine (1, 1a) pour la préparation du terrain à la culture, selon l'une des revendications de 1 à 6, **caractérisée en ce qu'**elle est dotée d'un troisième dispositif (130) apte à étendre un film de matière plastique sur les portions de sol; ce dispositif couvre la portion dès qu'elle a été formée.

8. Machine (1, 1a, 1b) pour la préparation du terrain à la culture, selon l'une des revendications de 1 à 7, **caractérisée en ce qu'**elle prévoit le montage côte à côte d'une pluralité de machines (1, 1a, 1b) sur un châssis (12), solidaire du tracteur de traction.

9. Machine (1, 1a, 1b) pour la préparation du terrain à la culture, selon la revendication 8, **caractérisée en ce qu'**elle prévoit des organes de transmission (8) du mouvement de la machine (1, 1a) à la pluralité de machines (1b) installées côte à côte.

10. Méthode pour la préparation du terrain à la culture en utilisant une machine (1, 1a, 1b) selon l'une des revendications précédentes, en délimitant des portions de sols et en y introduisant des tuyaux (121) pour l'irrigation et la fertilisation ; cette méthode comprend les phases suivantes :
- poser les tuyaux (121) pour l'irrigation et la fertilisation lors de la délimitation des portions de sol ;
- arroser, par incorporation dans le terrain, de substances liquides et/ou solides telles que des produits phytopharmaceutiques, des désherbants, des engrais et des amendements ; cette irrigation est réalisée lors de la délimitation des portions de sol ;
**caractérisée en ce que** la phase d'irrigation de substances liquides par incorporation dans le terrain a lieu à travers l'ouverture d'une cavité lenticulaire (6) dans le terrain et la pulvérisation des produits fumigants liquides dans la cavité lenticulaire (6) ; la cavité lenticulaire (6) est formée sans retourner le terrain situé au-dessus ; ainsi la cavité (6) se referme après la pulvérisation des produits fumigants liquides, ce qui empêche la dispersion dans l'atmosphère des fumées produites par les produits fumigants liquides.
